(19)

Europäisches
Patentamt
European
Patent Office
Office européen
des brevets

(11) **EP 2 302 641 A2**

(12) **EUROPEAN PATENT APPLICATION**

(43) Date of publication:
**30.03.2011 Bulletin 2011/13**

(51) Int Cl.:
*G21F 1/10* (2006.01)       *G21F 3/035* (2006.01)
*B05D 1/18* (2006.01)       *B29C 41/00* (2006.01)

(21) Application number: **10178322.3**

(22) Date of filing: **22.09.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **24.09.2009 JP 2009219100**

(71) Applicant: **SHOWA GLOVE Co.**
**Himeji-shi**
**Hyogo 670-0802 (JP)**

(72) Inventors:
• **Higuchi, Naohito**
**Himeji-shi Hyogo 670-0802 (JP)**
• **Sato, Yuya**
**Himeji-shi Hyogo 670-0802 (JP)**

(74) Representative: **Vossius & Partner**
**Siebertstrasse 4**
**81675 München (DE)**

(54) **Non-support type disposable glove and method for producing the same**

(57)     A non-support type disposable glove is disclosed in which an ash content after combustion is 0.6% by weight or less. A method for producing the non-support type disposable glove is also disclosed, which adjusts the ash content after combustion to 0.6% by weight or less by a dipping method of a polyurethane emulsion using an aqueous coagulant solution having a concentration of 15% by weight or less. The non-support type disposable glove of the present invention is not only excellent in workability, sufficient in strength, small in calorific value and carbon dioxide diacharge even when it is combusted, but also is small in incinerated ash so that the incinerated ash can be readily controlled.

EP 2 302 641 A2

**Description**

The present invention relates to a non-support type disposable glove and a method for producing the same, and more particularly, relates to a non-support type disposable glove, which is worn so as to protect hands during working in medical fields, nuclear power plants and nuclear fuel reprocessing plants, and is incinerated and disposed after once used, and a method for producing the same.

In medical fields, workers wear a working protective glove so as to protect their hands from pathogens such as bacteria and viruses. In radioactive material controlled areas of nuclear power plants and nuclear fuel reprocessing plants, workers wear a working protective glove so as to prevent their hands from contamination with radioactive materials. These gloves are often disposed and incinerated after they are used only once so as to prevent diffusion of pathogens and radioactive materials. In particular, regarding a glove used in radioactive material controlled areas, incinerated ash thereof is also severely controlled, if necessary.

With respect to the working protective glove, in order to stably operate an incineration furnace, a limitation is defined, as a standard of glove materials, as follows: 50 ppm or less of lead, 50 ppm or less of zinc, and 100 ppm or less of silicon, and also a strict limitation is defined with respect to halogen and phosphorus. This is because that these metals exist in the form of oxides during incineration, and these metal oxides are likely to cause clogging of a hot air outlet and a filter in the incineration furnace. Stainless steel is often used as the material of an incineration facility, and a quantitative limitation is also defined with respect to halogen and phosphorus so as to prevent corrosion caused by these substances.

Furthermore, when the working glove used in the nuclear power plant or the nuclear fuel reprocessing plant is subjected to incineration disposal, it is desired that the amount of ash after incineration be decreased to 1% by weight or less so as to decrease the control space of incinerated ash as small as possible.

Taking protection of hands during working and strength against breakage into consideration, there have conventionally been widely used, as the materials of a common working glove, soft polyvinyl chloride (PVC), polyethylene (PE), natural rubber (NR) and polyurethane (PU); and synthetic rubbers such as chloroprene rubber (CR), isoprene rubber (IR), nitrile butadiene rubber (NBR) and acrylic rubber (ACM).

However, when the glove is subjected to incineration disposal after being used once as described above, there remain problems such as air pollution during incineration, calorific value, and the amount of incinerated ash.

For example, when soft polyvinyl chloride is incinerated, hydrogen chloride or dioxin may generate depending on the conditions of incineration. Polyethylene has a problem that it is difficult to produce a glove with satisfactory workability and also much heat is generated during incineration and thus an incineration furnace is damaged. A natural rubber can ensure sufficient strength, but has problems that a large amount of incinerated ash is generated because of a vulcanizing agent or a vulcanization accelerator used to ensure strength, and that stable incineration disposal cannot be conducted because of a large calorific value. Polyurethane makes it possible to attain comparatively well-balanced performance, but present polyurethane does not always suffice. A chloroprene rubber has the same problem as that of soft polyvinyl chloride, and generates a large amount of incinerated ash derived from compounding agents. An isoprene rubber has a problem that a large amount of an emulsifier must be used so as to stabilize an emulsion and also use of a vulcanizing agent and the like generates incinerated ash. A nitrile butadiene rubber also has a problem of incinerated ash caused by the vulcanizing agent and the like. An acrylic rubber has still not achieved sufficient strength.

From the above points of view, there has been proposed a glove for working in nuclear power plants obtained by coating the surface of a glove made of fibers with an acrylic resin as a material for preventing slip (see Japanese Unexamined Patent Publication No. 2007-204904). However, it is a so-called support type glove to which strength has been imparted by a glove made of fibers called a raw glove, and since this glove becomes high bulky because of two layers of the resin coating and the raw glove, it is poor in workability and generates much combustion heat as a whole including the raw glove during incineration, and also generates a large amount of exhaust carbon dioxide, and thus may cause environmental deterioration. As described above, it is difficult to say that the glove has sufficient strength.

An object of the present invention is to provide a disposable glove, which can solve the above conventional problems and is a non-support type glove that has satisfactory workability and sufficient strength and generates little heat and little carbon dioxide discharge even when it is combusted, and also generates little incinerated ash and enables easy control of incinerated ash.

A first feature of the present invention for achievement of the above object is a non-support type disposable glove wherein an ash content after combustion is 0.6% by weight or less.

A second feature of the present invention is a non-support type disposable glove wherein an ash content after combustion is 0.4% by weight or less.

A third feature of the present invention is a non-support type disposable glove wherein an ash content after combustion is 0.3% by weight or less.

A fourth feature of the present invention is the non-support type disposable glove according to any one of the above items, which is made of polyurethane.

A fifth feature of the present invention is the non-support type disposable glove according to any one of the above items, which is used for working in a radioactive material controlled area.

A sixth feature of the present invention is the non-support type disposable glove according to any one of the above items, wherein a metal oxide after incineration contains 0.021% by weight or less of silicon oxide, 0.006% by weight or less of zinc oxide and 0.005% by weight or less of lead oxide.

A seventh feature of the present invention is a method for producing a non-support type disposable glove, which adjusts the ash content after combustion to 0.6% by weight or less by a dipping method of a polyurethane emulsion using an aqueous coagulant solution having a concentration of 15% by weight or less.

An eighth feature of the present invention is the method for producing a non-support type disposable glove according to the above item, wherein the concentration of the aqueous coagulant solution is 10% by weight or less.

A ninth feature of the present invention is the method for producing a non-support type disposable glove according to the above item, wherein the coagulant is calcium nitrate.

A tenth feature of the present invention is the method for producing a non-support type disposable glove according to the above item, wherein a metal oxide after incineration contains 0.021% by weight or less of silicon oxide, 0.006% by weight or less of zinc oxide and 0.005% by weight or less of lead oxide.

According to the present invention, it is possible to remarkably improve a protective function and safety reliability during use, and stability of incineration disposal of a disposable protective glove which is used in medical fields, controlled areas of nuclear power plants and nuclear fuel reprocessing plants, and to reduce environmental burden and the amount of incinerated ash.

The feature of the non-support type disposable glove of the present invention (hereinafter sometimes referred to simply as the glove of the present invention) lies in that the ash content after combustion is 0.6% by weight or less. When the ash content after combustion is more than 0.6% by weight, an object of the present invention of decreasing the control space of incinerated ash is not sufficiently achieved.

The method for producing a non-support type disposable glove of the present invention is not particularly limited and any method can be used as long as it is a method which enables the control of the ash content after combustion to 0.6% by weight or less, preferably 0.4% by weight or less, and more preferably 0.3% by weight or less.

Examples of the usable methods include a method in which two films are laid one upon another and are welded along a shape of a hand, excluding a portion into which the hand is inserted, to form an end of a glove, and then an excess portion of the films is cut at the outer periphery of the welded portion.

The glove produced by this method enables easy mass production and low-cost production. However, because of lack of three-dimensionality, the glove does not fit the hand shape and is slightly poor in workability, and is also likely to generate poor welding at the welded portion, and thus the glove is not suited for use in the field where special preference is required to safety.

There can also be exemplified a method in which a hand mold made of a ceramic or a metal is dipped in an organic solvent solution of a polymer as it is to thereby apply the solution to the surface of the hand mold, and then the raw resin is solidified by heating, or a method which includes treating the surface of a hand mold with a coagulant, dipping the hand mold in a bath of an emulsion of a polymer, pulling up and drying the hand mold, water-washing the polymer coat layer formed on the surface of the hand mold together with the hand mold, treating the coat layer with a slip coating agent so as to improve slip properties of the inside of the glove, drying and optionally thermally curing the glove, and peeling the coat layer off the hand mold by turning over the hand mold to obtain a glove.

The former method has a problem that a plasticizer and an organic solvent remain on a glove product and gasses thereof are vaporized during the processing process and thus a treatment such as collection must be conducted, whereas the latter method does not have such a problem and therefore, the latter method is preferable.

Any material can be used as the material of the glove of the present invention as long as the ash content after combustion is 0.6% by weight or less. However, a polyurethane emulsion is preferable in that it does not require a vulcanization reaction accompanied by blending of sulfur, a vulcanization accelerator and a metal oxide such as zinc oxide used in natural rubber and synthetic rubber emulsions, that it does not necessitate a silicone-based or fluorine-based surfactant to be blended so as to improve tackiness of a film, and that the obtained film has higher elasticity and higher strength than those of a film formed from an acrylic resin emulsion.

During incineration, the metal oxide is likely to cause clogging of a hot air outlet and a filter in an incineration furnace. Therefore, a material is desirably selected and used so that the metal oxides after incineration should be 0.021% by weight or less of silicon oxide, 0.006% by weight or less of zinc oxide and 0.005% by weight or less of lead. As such a material, for example, an aqueous polyurethane emulsion composition disclosed in Published Japanese Translation (TOKUHYO) No. 2008-506830 of the PCT Application is preferable.

The thickness of the glove of the present invention is preferably from about 0.05 to 0.30 mm.

Examples of the coagulant used in the present invention include inorganic salts, for example, halogenated metals such as barium chloride, calcium chloride, magnesium chloride, zinc chloride and aluminum chloride; nitrates such as barium nitrate, calcium nitrate and zinc nitrate; acetates such as barium acetate, calcium acetate and zinc acetate; sulfates such as calcium sulfate, magnesium sulfate and aluminum sulfate; and acids, for example, acetic acid, citric acid and boric acid. These coagulants many be used singly or in combination of two or more. Of these coagulants, calcium nitrate is preferable because the coagulation effect is obtained in a short time and the amount of incinerated ash decreases.

The concentration of the coagulant is usually 20 to 40% by weight. Since this coagulant component constitutes a portion of incinerated ash in the case of incinerating the used glove, it is preferred that the amount of the coagulant component be as small as possible. When the coagulant component is used in the amount of preferably 15% by weight or less, more preferably 10% by weight or less, and most preferably 8% by weight or less, it is possible to remarkably decrease the amount of incinerated ash in the case of incinerating the non-support type disposable glove of the present invention. The lower limit of the concentration of the coagulant is not particularly limited as long as it is a concentration which enables coagulation of an emulsion. However, when the concentration is too low, the coagulation rate becomes slow and productivity lowers. Therefore, the concentration is preferably 3% by weight or more.

As described above, in the present invention, the ash content after combustion is 0.6% by weight or less, preferably 0.4% by weight or less, and more preferably 0.3% by weight or less. The amount of ash after incineration is measured by the following method:

A specimen of a glove is cut out from the palm center portion by scissors made of alumina and about 1.5 g of the specimen is used as a sample. The sample is put in a magnetic crucible, weighed and then incinerated in an electric furnace of 800°C for 2 hours. The ash content is calculated by the following calculation formula:

$$\text{Ash content (\% by weight)} =$$

$$[\text{Weight (g) of ash/ Weight (g) of sample}] \times 100$$

Quantitative analysis of metals (metal oxides) in the ash is conducted by energy dispersive X-ray fluorescence spectrometer (EDXRF) using pressed ash. In examples, analysis was conducted using SEA2220A manufactured by SII NanoTechnology Inc. The content of metals (metal oxides) is also shown by % by weight to the specimen of a glove as in the ash content.

The present invention will be described in more detail below by way of examples and comparative examples, but the present invention is not limited thereto at all.

Preparation of aqueous coagulant solution:

To calcium nitrate as a coagulant, distilled water was added and a mold release agent LEAGYGUARD R-6G (manufactured by HIRONO CHEMICAL CORPORATION, a mixed water dispersion of calcium stearate and calcium carbonate) was dissolved in the mixture so that the solid content becomes 3% by weight. The concentration of calcium nitrate was respectively adjusted to 5% by weight, 7% by weight, 15% by weight, 23% by weight or 40% by weight.

Preparation of polymer emulsion:

An aqueous polyurethane emulsion ENVITHANE-9000 (manufactured by DONGSUNG CHEMICAL Co. Ltd.) was diluted with distilled water so that the solid content becomes 30% by weight.

Glove inside slip coating agent:

To 90 parts by weight of distilled water, 10 parts by weight of an adhesion-preventing agent LEAGYGARD U-5SR (manufactured by HIRONO CHEMICAL CORPORATION, a mixture of an acrylic resin and a polyurethane resin) was added, followed by stirring at room temperature for 2 hours.

Example 1

A hand mold made of ceramic heated to 70°C was dipped in an aqueous 5 % by weight coagulant solution prepared as described above, pulled up immediately and then dried in an oven dryer of 70°C for 2 minutes. The dried hand mold was cooled to 50°C, dipped in the above polyurethane emulsion for about 60 seconds and pulled up, and then the excess emulsion was dropped, followed by drying in an oven dryer of 70°C for about 2 minutes. The hand mold coated with polyurethane was dipped in warm water of 60°C for about 1 minute, thereby removing the excess coagulant and surfactant.

A sleeve portion of a polyurethane coating film on the hand mold was subjected to bead processing and the coating film was dipped in the glove inside slip coating agent described above, together with the hand mold, followed by immediate pulling-up, drying in an oven dryer of 70°C for about 2 minutes and further drying by heating in an oven dryer of 120°C for about 20 minutes. The coating film thus obtained was peeled off the hand mold by turning over the hand mold to obtain a 0.13 mm-thick glove made of polyurethane.

Example 2

In the same manner as in Example 1, except that an aqueous 7 % by weight calcium nitrate coagulant solution was used as the aqueous coagulant solution and the hand mold was dipped in the above polyurethane emulsion for about 30 seconds, a 0.13 mm-thick glove made of polyurethane was obtained.

Example 3

In the same manner as in Example 1, except that an aqueous 15 % by weight calcium nitrate coagulant solution was used as the aqueous coagulant solution and the hand mold was dipped in the above polyurethane emulsion for about 10 seconds, a 0.13 mm-thick glove made of polyurethane was obtained.

Comparative Example 1

In the same manner as in Example 1, except that an aqueous 23 % by weight calcium nitrate coagulant solution was used as the aqueous coagulant solution and the hand mold was dipped in the above polyurethane emulsion for about 7 seconds, a 0.13 mm-thick glove made of polyurethane was obtained.

Comparative Example 2

In the same manner as in Example 1, except that an aqueous 40 % by weight calcium nitrate coagulant solution was used as the aqueous coagulant solution and the hand mold was dipped in the above polyurethane emulsion for about 4 seconds, a 0.13 mm-thick glove made of polyurethane was obtained.

With respect to the gloves made of polyurethane obtained in Examples 1 to 3 and Comparative Examples 1 to 2 described above, the amount of ash after combustion and the amounts of lead oxide, zinc oxide and silicon oxide in ash were respectively measured by the above methods described in the specification. The results are shown in Table 1. The amount of calcium oxide derived from the coagulant component is also shown in Table 1.

Table 1

| Items (% by weight) | Example 1 | Example 2 | Example 3 | Comp. Example 1 | Comp. Example 2 |
|---|---|---|---|---|---|
| Ash | 0.3 | 0.4 | 0.6 | 0.8 | 1.1 |
| Calcium oxide | 0.27 | 0.37 | 0.57 | 0.78 | 0.98 |
| Lead oxide | 0.001 | 0.002 | 0.002 | 0.001 | 0.002 |
| Zinc oxide | 0.001 | 0.002 | 0.001 | 0.001 | 0.001 |
| Silicon oxide | 0.018 | 0.017 | 0.019 | 0.018 | 0.019 |
| Concentration of coagulant (calcium nitrate) | 5 | 7 | 15 | 23 | 40 |

As described above, the glove of the present invention is a non-support type glove, and therefore it is not bulky and is satisfactory in workability, and also has high strength. Since the ash content after combustion is 0.6% by weight or less, it is possible to decrease the amount of incinerated ash to be controlled when the glove of the present invention is used in a nuclear plant and the generated incinerated ash must be controlled.

Furthermore, because of low combustion heat during incineration, an incineration furnace is not damaged. Also, because the amount of a specific metal oxide is small, there is no problem such as clogging of a hot air outlet and a filter of an incineration furnace, and also toxic substances such as dioxin are not generated, resulting in little environmental burden. As described above, the present invention has numerous advantages.

**Claims**

1. A non-support type disposable glove wherein an ash content after combustion is 0.6% by weight or less.

2. A non-support type disposable glove wherein an ash content after combustion is 0.4% by weight or less.

3. A non-support type disposable glove wherein an ash content after combustion is 0.3% by weight or less.

4. The non-support type disposable glove according to any one of claims 1 to 3, which is made of polyurethane.

5. The non-support type disposable glove according to any one of claims 1 to 4, which is used for working in a radioactive material controlled area.

6. The non-support type disposable glove according to any one of claims 1 to 5, wherein a metal oxide after incineration contains 0.021% by weight or less of silicon oxide, 0.006% by weight or less of zinc oxide and 0.005% by weight or less of lead oxide.

7. A method for producing a non-support type disposable glove, which adjusts the ash content after combustion to 0.6% by weight or less by a dipping method of a polyurethane emulsion using an aqueous coagulant solution having a concentration of 15% by weight or less.

8. The method for producing a non-support type disposable glove according to claim 7, wherein the concentration of the aqueous coagulant solution is 10% by weight or less.

9. The method for producing a non-support type disposable glove according to claim 7 or 8, wherein the coagulant is calcium nitrate.

10. The method for producing a non-support type disposable glove according to any one of claims 7 to 9, wherein a metal oxide after incineration contains 0.021% by weight or less of silicon oxide, 0.006% by weight or less of zinc oxide and 0.005% by weight or less of lead oxide.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007204904 A
- JP 2008506830 PCT